# NEUE EUROPÄISCHE PATENTSCHRIFT

(11) **EP 0 696 558 B2**
(45) Veröffentlichungstag und Bekanntmachung des Hinweises auf die Entscheidung über den Einspruch: **04.01.2006**
(45) Hinweis auf die Patenterteilung: 25.11.1998
(21) Anmeldenummer: 95109750.0
(22) Anmeldetag: 22.06.1995
(51) Int. Cl.: C04B 28/02, C04B 7/52, C04B 40/06, C04B 111/70

(54) **Verfahren zur Herstellung von Feinstzement-Bindemittelmischungen.**
Process for preparing superfine cement binder mixtures.
Procédé pour fabriquer mélanges de liant à base de ciment ultra-fin.

(30) Priorität: 12.08.1994 DE 4428692
(43) Veröffentlichungstag der Anmeldung: 14.02.1996
(60) Teilanmeldung: 97106300.3
(73) Patentinhaber: DYCKERHOFF AKTIENGESELLSCHAFT, D-65203 Wiesbaden (DE)
(72) Erfinder: Chartschenko, Igor, Dr., D-99425 Weimar (DE); Teichert, Horst-Dieter, D-65366 Geisenheim (DE); Perbix, Wolfgang, Dr., D-65189 Wiesbaden (DE); Rudert, Volkhart, Dr., D-55271 Stadecken-Elsheim (DE)
(74) Vertreter: Patentanwälte Dr. Solf & Zapf

(56) Entgegenhaltungen:
- EP-A- 0 157 749
- EP-A- 0 455 940
- EP-A- 0 517 869
- WO-A-90/13524
- DD-A- 261 354
- DE-A- 3 601 970
- DE-A- 3 813 445
- DE-C1- 4 242 107
- US-A- 4 875 937
- US-A- 5 026 215
- CHEMICAL ABSTRACTS, vol. 118, no. 6, 8.Februar 1993 Columbus, Ohio, US; abstract no. 44459r, XP000352522 & JP-A-04 254 457 (DENKI KAGAKU KOGYO K.K.) 9.September 1992
- ZKG INTERNATIONAL, Bd. 43, Nr. 8, 1.August 1990, Seiten 399, 400-404, XP000175437 FONTANARI F: "DAS NEUE ROEFIX-TROCKENMOERTELWERK SENNWALD/SCHWEIZ"
- ZEMENT, KALK, GIPS, Bd. 41, Nr. 12, 1988, WIESBADEN DE, Seiten 616-623, XP002000145 G.BLUNK ET AL.: "Zum Einfluss der Korngrössenverteilung von Hüttensand und Klinker auf die Eigenschaften von Hochofenzementen"
- Rapport de thèse de Melle. Benhamou, Soutenance publique du 20 mai 1994
- Norme française des ciments de 1982.
- Fiches techniques 661 et 662 d'Alcan Chemicals, Février 1982.
- Datenblatt Tricosal 188 (EH)
- Fabrication et utilisation des Liants H. Papadaki et Vênuat, 1966.
- STRA Injekt Berg en ny generation injekterginsbruk, information broschure issued 25.06.1993
- "Sulfatresistent injekteringscement", article in Cementa No. 3 1985.
- Injekteringscement, P. Degerhamn, information page from 1995.
- Ultrafint cement, P. Degerhamn, information page from 1995.
- Ivány, G., Rosa, W., Beton- und Stahlbetonbau 87 (1992) S. 224-229 "Füllen von Rissen und Hohlräumen im Konstruktionsbeton mit Zementsuspension"
- Technisches Merkblatt POLYMENT Micropress, 1192/5T (1992)
- ZTV-RISS 93, Verkehrsblatt - Dokument Nr. B 5237 - Vers. 06/93 (1993), S. 20-21
- Technisches Merkblatt MICROCEM, 0395/2T (1995)
- Prospekt Mikrodur Nr. 188 /PE Zei (1994), Dyckerhoff AG
- Sager, H., Graeve, H., "Einsatzmöglichkeiten zementgebundener Injektionsysteme", Beton 1/94 (1994), S. 12-16
- Technisches Merkblatt ADDIMENT Injektionsmörtel, 0494/3T RevO (1994)
- Technisches Merkblatt ADDIMENT UW-Injektionsmörtel, 1193/1OT (1993)

## Beschreibung

Die Erfindung betrifft ein Verfahren zur Herstellung eines Trockengemanges in Form einer Feinstzement-Bindemittslmischung zur Herstellung von Zementsuspenslonen zum Füllen und/oder Verpressen von Poren räumen und Hohlräumen In Lockergesteinen oder Rissen und Hohlräumen im Fels oder in Betonbauwerken.

Feinstzemente sind sehr felnkömige hydraulische Bindemittel mit stetig und eng abgestuften Kornvertellungen und einer Begrenzung des Größtkoms. Die Eigenschaften und die Verwendung von Feinstzamanten ist geragen, zum Beispiel In einem vorläuflgen Merkblatt für Einpressarbelten mit Feinstbindemittein In Lockergesteinen (Bautechnik 70, [1993], Haft 9, Ernst & Sohn, Seiten 550 bis 560, undZTV-RISS 93, Verkahrshlatt-Dokument B 5237, Verkehreblatt-Verleg).

Die Terminologie in den beiden genannten Regelwerken ist nicht einheitlich, Im Merkblatt wird der Begriff 'Feinstbindemittel" und in der ZTV-RISS der Begriff "Feinzement" verwendet Die amerikanische Literatur spricht von mikrofeinen Portlandzementen (US-PS 5 106 423). Im folgenden wird hauptsächlich der Begriff "Feinstzement" verwendet, der auch in einschlägigen Fachberichten verwendet wird (Beton 1/94, Saite 12 bis 16, Falsbau 11 [1993], Nummer 6, Sonderabdruck, Bauingenleur 67, [1992], Seite 499 bis 504).

Nach den Vorschriften der Regelwerke soll der Feinstzement zur Herstellung von Zsmentsuspensionen einen Slebdurcngang van z 95% bei einer Maschenweite von 16 µm (0,016 mm) haben und mit geeigneten Zusatzstoffen und Zusatzmitteln hergestellt sein. Die Begriffe und Begriffsinhalte der Bestandtelle Zusatzstoffe und Zusatzmittel sind im Zement-Markblatt Nr B 3, BBD/KA 1.93/20 definiert

Als Füllgut zum Füllen und/oder Verpressen (injektion) wird eine Zementsuspension verwendet, die grundsätzlich an der Baustelle hergestellt wird. Sie wird zusammengestellt aus mindestens zwei G ebindakomponsnten, nämlich der einen, enthaltend Felnstzement und Zusatzstoffe und der anderen, enthaltend Zusatzmittel (Gyorgy Ivényl, Walter Rosa "Füllen von Rissen und Hohlräumen im Konstruktionsbau mit Zementsuspensionen", Beton- und Stahlbstonbau B7 [1992], Heft 9, Seite 224 bis 229; Helmut Sager und Holger Graeve: "Einsatzmöglichkeiten zemantgebundener Injektionssysteme", Beton 1/94, Seite 12 bis 16).

Der Erfolg einer Injektion mit dem Füllgut ist abhängig von den zum Beispiel rheologischen Eigenschaften der Zementsuspension und den mechanisch-technologischen Eigenschaften des hydratisierten Materials In den Hohlräumen bzw. Rissen. Erforderlich ist ein wirksames Aufschließen des Fsinstzements durch eine lnlensivmischung und die richtige Beimengung der erforderlichen Zusatzmittel in der vom Hersteller des Feinstzements vorgeschriebenen Reihenfolge und Arbeitsweise. Die festen und flüssigen Gebindekomponenten zur Herstellung des Füllguts werden vom Hersteller als Einzelkomponenten angeliefert und müssen auf der Baustelle entsprechend den Regelwerken in Gebinden gelagert werden, wobei mit erheblichem Aufwand große Sorgfalt bezüglich der Lagerbedingungen und der Einhaltung der Mischungsverhätlnisse und der Mischungeraihenfoiga zur fachgerechten Bereitstellung der Zementsuspensionen gewährleistet werden muß.

In der DE 40 13 871 Al wird gemäß Anspruch 1 die Mischreihenfolge zur Herstellung der Zementsuspension aus Fainstzement und Zusatzmitteln, wie Verflüssiger, Quellmittel, Abbindeverzögerer und Wasserrückhaltemittel genau vorgeschrieben und gemäß Anspruch.2 gefordert, daB demineralisiertes Wasserverwendet werden soll. Als Queilmittel sollen Aluminate und Bentonite anthaiten sein.

Gemäß US-PS 5 106 423 wird ebenfalls eine bestimmte Mischreihenfolge vorgeschrieben (Spalte 2, Zelle 37 bis 56). Gemäß dieser Druckschrift können unter anderem auch Gemische aus separat gemahlener Feinstschlacke und separat gemahlenem Feinstzement zusammengestellt werden, wenn die Feinheit der Stoffe bezüglich besonderer Anforderungen varilert werden soll (Spalte 7, Zelle 8 bis 26). Zudem kann vorgesehen sein. Inerte Zusatzstoffe gleicher Komgröße zu verwenden (Spalle 7, Zeile 38 bis 46). Das Anliefem und Lagem von Gebindekomponenlen sowie das Entsorgen von Gebinden sind Maßnahmen, die die Füllgutherstellung ertieblich verteuern. Außerdem ist die vorgeschriebene Handhabung und Mischung der Gebindekomponenten auf der Baustelle in vielen Fällen nicht ausreichend gewährlelstbar und erfordert sehr aufwendige und strenge Überwachungsbedingungen. Zudem ist feststellbar, daß, selbst wenn die bekannten Aufschließmethoden des Feinstzements beachtet werden, die Qualität der Zementsuspension und insbesondere des aus der Zementsuspension entstehenden hydratisierten Materials von Gebinde zu Gebinde erheblich schwanken kann. Die Ursachen dafür waren bisher unbekanrrt.

Aufgabe der Erfindung ist, die Herstellung von Füllgut auf der Baustelle zu vereintachen und dabei die vorgeschriebenen Eigenschaften des Füllguts und des hydratisierten Materials ohne besonderen zusätzlichen Aufwand zu gewährleisten.

Diese Aufgabe wird durch die Merkmale des Anspruchs 1 gelöst. Vortellhafte Weiterbildungen der Erfindung werden In den Unteransprüchen gekennzeichnet.

Das erfindungsgsmaße hergestellte Trockengemenge besteht aus einem auf die jeweilige Anwendung abgestimmten, werksseltlg vorkontektionlerten Gemisch (Weridrockenmischung) aus einer besonders aufbereiteten Feinstzement-Bindemittelmischung, die alle für die jeweilige spezielle Anwendung erforderlichen Zusatzstoffe und Zusatzmittel vorzugsweise mit gleicher oder höherer Mahlfeinheit sowie abgestimmter Komverteilung, guter Dispergierbarkeit in Wasser und hoher Reaktivität aufweist Das Trockengemenge ist auf der Baustelle nur noch mit Wasser in der vorgeschriebenen Menge anzumischen. Die Erfindung betrifft somit eine unter Baustellenbedingungen einfach anmischbare Werktrockenmischung. Die Gefahr etwaiger Mischfehler bei gravimetrischer und/oder volumetrischer Abstimmung von Gebindekomponenten auf der Baustelle ist ausgeschlossen. Zudem entfällt die Einhaltung der bisher erforderlichen Reihenfolge bei der Mischung von Gebindekomponenten, die bei Mißachtung bisher zu erheblichen Qualitätsänderungen geführt hatte. Das auf die Formulierung der Werktrockenmischung mit vorgegebener Mahlfeinheit und Komverteilung abgestimmte erfindungsgemäße Herstellungsverfahren ermöglicht die genaue Dosierung aller Komponenten wie des Klinkerfeinstmehls und/oder des Hüttensandteinstmehls sowie der trockenen Additive, wie Zusatzstoffe und Zusatzmittel. Die Werktrockenmischung erfordert kein demineralisiertes Wasser. Sie kann auch mit Restwasser mit Chloridgehalten entsprechend Tabelle 1 der "Restwasser-Richtlinie", des DAfStb (Deutscher Ausschuß für Stahlbeton, "Richtlinie für Herstellung von Beton unter Verwendung von Restwasser, Restbeton und Restmörtel" [Ausgabe September 1991]) angemischt werden. Infolge der abgestimmten Rezeptur sind die verarbeitungstechnischen Eigenschaften der Suspensionen sowie die mechanisch-technologischen Eigenschaften des hydratisierten Materials weitgehend unabhängig von der Wasserqualität.

Die Vermeidung von verarbeitungstechnischen Fehiem beim Mischungsansatz der Suspensionen gemäß vorliegender Erfindung ist zum Beispiel für die Akzeptanz und den Erfolg von lnjektionsmaßnahmen mit Feinstbindemitteln von entscheidender Bedeutung, weil eine Wiederholung von Injektionsmaßnahmen zum Ersatz zuvor injizierter, fehlerhaft angemischter Füllgüter mit unzureichenden Eigenschaften in der Regel nicht mit wirtschaftlich vertretbarem Aufwand möglich ist. Zudem bietet der Einsatz von erfindungsgemäßen Werktrockenmischungen wirtschaftliche Vörteile bei der Abfüllung, Lagerung und beim Transport sowie bei der Entsorgung etwaiger Transportbehäfter.

Das nach der Erfindung hergestellte Trockengemenge enthält das oder die Feinstmehle, trockene Zusatzmittel und gegebenenfalls trockene Zusatzstoffe. Das Feinstmehl besteht aus einem Portlandzementklinkerfeinstmehl (das ist ein ohne weiteres, ohne Sulfatzusatz, gemahlener und gesichteter Portlandzementklinker) oder aus einem Gemenge aus dem Portlandzementklinkerfeinstmehl und einem Hüttensandfeinstmehl (das ist ein ohne weiteres gemahlener und gesichteter Hüttensand) oder lediglich des Hüttensandfeinstmehl plus Anreger. Als Zusatzstoff wird vorzugsweise Bentonit verwendet Zusatzmittel sind im wesentlichen Fließmittel bzw. Dispergiermittel, Erstarrungsverzögerungsmittel, Wasserrückhaltemittel, Erstarrungsbeschleunigungsmittel und Quellkomponenten.

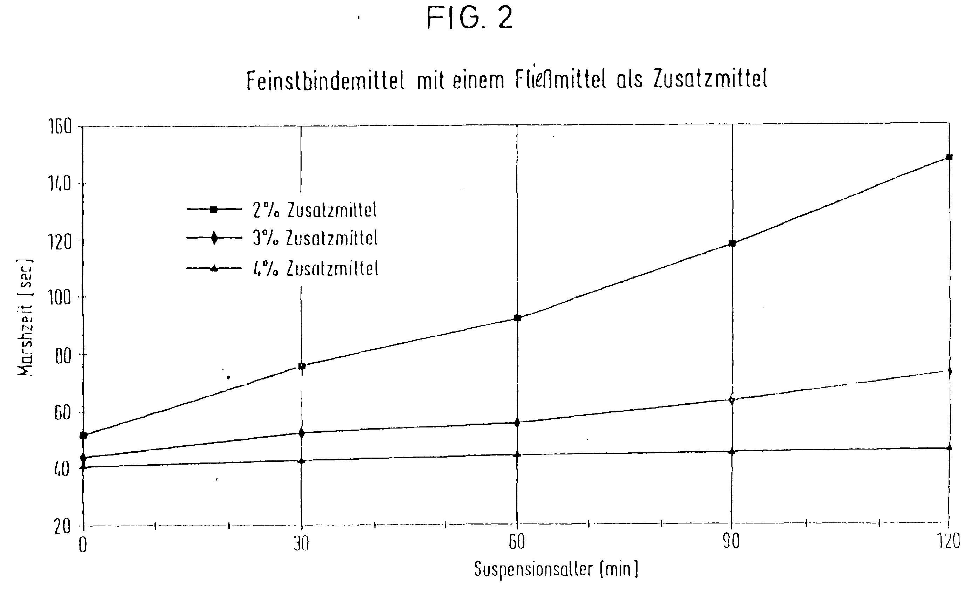

Die Zusatzmengen zum Klinkerfeinstmehl oder zum Gemenge aus Klinkerfeinstmehl und Hüttensandfeinstmehl oder zum Hüttensandfeinstmehl sind sehr genau und reproduzierbar aufeinander abgestimmt, wobei vorzugsweise alle wesentlichen Bestandteile eine Komverteilung d95 ≤ 24 µm, vorzugsweise d95 ≤ 16 µm, und d50 ≤ 7 µm, vorzugsweise d50 ≤ 5 µm, und vorzugsweise ein Verhältnis von d50 zu d95 = 0,33 ± 0,04 aufweisen (d95 - Korndurchmesser bei 95 Gew.-% des Siebdurchgangs; d50 - Komdurchmesser bei 50 Gew.-% des Siebdurchgangs). Insbesondere wenn diese Bedingungen eingehalten werden, ist es möglich, den Einfluß eines Zusatzmittels zu optimieren. Beispielsweise ergibt sich der Einfluß der Zusatzmenge, zum Beispiel eines Flieämlftels, auf die verarbeitungstechnischen Eigenschaften einer Zementsuspension aus einer Feinstzement-Bindemittelmischung mit einem Wasser-Bindemittelverhältnis von 0,7 aus der nachfolgenden Figur 2. Die Kurvenverläufe verdeutlichen ohne weiteres, daß bereits bei geringfügigen Abweichungen des Fließmittelanteils von einem vorgegebenen Mischungsverhältnis die den Injektionserfolg maßgeblich bestimmenden rheologischen Eigenschaften der Suspension beeinflußt werden. Dabei wird durch die Erhöhung des Fließmittelanteils von 2 auf 4 Gew.-% die Ausgangsviskosität der Suspension - in Figur 2 gekennzeichnet durch die Marshzeit zum Zeitpunkt t = 0 - vergleichsweise geringfügig beeinflußt; jedoch unterliegt die anschließende Viskositätsentwicklung während der Verarbeitungszeit des frischen Gemisches einer ausgeprägten Abhängigkeit von der Dosierung des Fließmittels. Eine sachgerechte Applikation von Zementsuspensionen kann daher nur dann erwartet werden, wenn sowohl die Ausgangsviskosität als auch die Viskosität nach Ablauf der Vorarbeftungszeit durch die Auswahl eines geeigneten Fließmittels mit abgestimmter Einwaage optlmiert werden.

Bei der Optimierung der Dosierung von Zusatzmitteln ist gleichzeitig der Einfluß des Additivs auf die Festigkeiten der hydratisierten Suspensionen zu berücksichtigen, damit den vor allem mit statisch wirksamen Instandsetzungsmaßnahmen einhergehenden Materialanforderungen entsprochen werden kann. Die in der nachfolgenden Tabelle 1 zusammengestellten Ergebnisse aus Druckfestigkeitsuntersuchungen an prismatischen Prüfkörpam zeigen, daß eine Über-Dosierung des Fließmittels von 5 Gew.-% bereits zu Frühfestigkeitseinbußen führt. Bei einem Fließmittelanteil von 6 Gow.-% sind keine Druckfestigkeiten mehr an den völlig unzureichend verfestigten Suspensionen meßbar.

**Tabelle 1**

| | |
|---|---|
| Frühfestigkeit von Zementsuspensionen (Wasser-Bindemittelverhältnis = 0,6) in Abhängigkeit von der Einwaage des Zusatzmittels | |

| Einwaage Zusatzmittel [Gew.-%] | Druckfestigkeit nach 2 Tagen [N/mm²] |
|---|---|
| 4% | 20,8 |
| 5% | 18,9 |
| 6% | nicht meßbar |

Überraschenderweise hat sich gezeigt, daß qualitätssicherungs- und verarbeitungstechnische Probleme bei der Verwendung von mehrkomponentigen Systemen auf der Baustelle vermieden werden können bei gleichzeitiger Erfüllung von hohen Ansprüchen an das Füllgut, wenn bei der Herstellung einer Zementsuspension ein vorkonfektioniertes Trockengemenge bestimmter Mahlfeinheit und Komverteilung verwendet wird. Dies gelingt dadurch, daß den Ausgangsmaterialien zur Herstellung der erfindungsgemäßen Trockengemenge die je nach Anwendungsfall erforderlichen Zusatzstoffe und Zusatzmittel bereits im Werk nach der ausschließlichen Mahlung eines Klinkers bzw. eines Hüttensandes beigemengt werden, so daß diesem Trockengemenge zur Verarbeitung auf der Baustelle lediglich noch Wasser entsprechend dem vorgegebenen Wasser-Bindemittelwert zur Bereitstellung der verarbeitungsfertigen Zementsuspension hinzuzugeben ist Dies ist möglich durch die Verwendung pulverförmiger Zusatzmittel und Zusatzstoffe mit einer zum Beispiel dem Feinstmehl entsprechenden Mahlfeinheit und Komverteilung, wodurch diese Zusatzstoffe und Zusatzmittel eine sehr gute Dispergierbarkeit und Reaktivität beim Anmischen derTrockenmischung mit Wasser erhalten. Die abgestimmte Dispergierbarkeit bzw. Wasserlöslichkeit und Reaktivität dieser redispergierbaren Trocken-Komponenten gewährleisten eine unmittelbare Wirksamkeit der Inhaftsstoffe nach der Vermengung mit dem Anmachwasser. Dabei ist überraschend, daß nicht nur unterschiedliche Zusatzmengen, sondern insbesondere unterschiedliche Mahlfeinheiten und Kornverteilungen, insbesondere im Rahmen der angegebenen d95- und d50- Grenzen bzw. Verhältnisse, entsprechend unterschiedliche Wirkungen erbringen, was vordem durch das Vorhalten von getrennten Gebindekomponenten und vorgeschriebenen Mischreihenfolgen sowie die Verwendung von demineralisiertem Wasser versucht worden war. Die Zusatzmittel reagieren im angegebenen Feinheitsbereich unerwartet sensibel, so daß als Parameter für vorbestimmbare Eigenschaften die Mahlfeinheit und die Kornverteilung verwendet werden können.

Zur Formulierung des Trockengemisches sind Mahl-, Sicht-, Dosler- und Mischanlagen erforderlich, die eine zielsichere Herstellung des Trockengemenges gleichmäßiger Qualität erlauben. Das erfindungsgemäße Verfahren ist dadurch gekennzeichnet, daß die Einzelkomponenten völlig getrennt bis zu einer vorgegebenen Mahlfeinheit und Komverteilung aufbereitet werden. Mit Hilfe exakt steuerbarer Dosier- und Mischanlagen wird anschließend die Trockenmischung gemäß ihrer vorgegebenen chemisch-mineralogischen Zusammensetzung durch Homogenisierung erstellt.

Die erfindungsgemäßen hergestellten vorkonfektionierten Trockenmischungen (Werktrockenmischungen) zeichnen sich dadurch aus, daß sie durch Mischen mit Wasser mischungsstabile niedrig- bis mittelviskose Zemantsuspensionen argeben, die sich aufgrund der chemisch-mineralogischen und physikalischen Spezifikation der Trockenmischung und der Konsistenz nach dem Anmischen mit Wasser sowie aufgrund geringer Reaktivität während der Verarbeitungszeitspanne durch besonders gute Verarbeitbarkeit auszeichnen, so daß sie als mineralische Systeme für Tränkungen und Injektionen aller Art geeignet sind. Zudem können aufgrund der Zusammensetzung der Trockenmischungen nach Ablauf der Verarbeitungszeitspanne vergleichsweise hohe Frühfestigkeiten des hydratisierten Gemisches erreicht werden, so daß derartige Zementsuspensionen auch für statisch-wirksame (kraftschlüssige) Maßnahmen geeignet sind und zwar unabhängig vom Feuchtezustand der zu injizierenden Bauteile.

Die Erfindung wird anhänd der Zeichnung im folgenden beispielhaft näher erlautert. Es zeigen:
- Fig. 1: schematisch eine Anlage zur Herstellung der Werktrockenmischung;
- Fig. 2: in einem Diagramm die Wirkung der Zusatzmenge eines Fließmälels;
- Fig. 3: In einem Diagramm Komverteilungen.

Die Erfindung erbringt erstmals eine baustellangerechte, baustellenfertige bzw. zweckorientierte Werktrockenmischung in Form eines einzigen trockenen Gemisches, das nur noch mit der vorgeschriebenen Menge Wasser anzumachen ist. Mischungsfehler bei der Dosierung der Bestandteile zur Herstellung des Trockengemenges können nicht mehr auftreten. Das Anmischen mit Wasser erfolgt mit einem Hochleistungsmischgerät. Während des Mischens können die hochfeinen, trockenen Zusatzmittel ihre Wirkung unmittelbar entfalten. Die Werlrtrockenmischung ist mit gleicher Zusammensetzung und gleicher Qualität beliebig oft herstellbar. Dies gelingt aufgrund der Erkenntnis, daß Zusatzmittel nicht gemeinsam mit dem Zementklinker vermahlen werden dürfen, daß die Zusatzmittel vorzugsweise die gleiche oder eine höhere Feinheit und abgestimmte Komverteilung aufweisen müssen und daß die Zusatzmittel in diesem Feinheftsbereich sehr intensiv wirken, indem relativ geringe Unterschiede in der Zusatzmenge (s. Fig. 2) und in der Komverteilung und Feinheit große Unterschiede in der angestrebten Wirkung zeigen. Die Zusatzmengen der Zusatzmittel betragen vorzugsweise 2 bis 5 Gew.-%.

Üblicherweise wird Feinstzement während der gemeinsamen Mahlung von Portlandzementklinker und zumindest einem Sulfatträger gewonnen, indem der entsprechende Feinstantell aus einer Zementmühle immer nur dann abgezweigt wird, wenn ein Auftrag zur Lieferung von Feinstzement vorliegt. Dabei wird durch Windsichtung der Anteil abgezweigt, der den Erfordemissen bezüglich des d95-Wertes entspricht. Im Rahmen der Erfindung wurde erkannt, daß diese Gewinnungsart die grundsätzliche Ursache dafür ist, daß die Zementsuspensionen von Lieferung zu Lieferung keine gleichbleibende Qualität aufweisen. Man hat in Unkenntnis der Ursache versucht, dem Übel durch die Schaffung von Gebinden und durch die Vorschrift besonderer Mischungsreihenfolgen zu begegnen, was aber zu keinem ausreichenden Erfolg führte. Erst die gesonderte Vormahlung und Sichtung des Zementklinkers zu Klinkerfeinstmehl und des Hüttensandes zu Hüttensandfeinstmehl, sofern in der Feinstzement-Bindemittelmischung Hüttensandfeinstmehl enthalten sein kann, sowie die Verwendung der Zusatzstoffe und der Zusatzmittel, insbesondere in zumindest gleicher Feinheit und Komverteilung, und die getrennte Bevorratung aller Komponenten für die Zusammenstellung von Trockengemengen ermöglicht die genaue Dosierung der Komponenten und nach einer Homogenisierung die Gewährleistung einer bestimmten Qualität des Füllgutes bzw. der Zementsuspension und des erhärteten Produkts. Erfindungswesentlich ist, daß die trockenen Zusatzmittel zumindest mit der Feinheit und Komverteilung der Feinstzement-Bindemittelmischung verwendet werden oder aber die Feinstzement-Bindemittelmischung insgesamt die geforderte Feinheit und Komverteilung aufweist, wobei die Zusatzmittel gröber sein können, sich aber in die Kornverteilung derart einreihen, daß die Kornverteilung.der Bindemittelmischung die geforderten Werte aufweist. Sofem der Markt die Zusatzmittel in der gewünschten Feinheit und Kornverteilung nicht zur Verfügung stellt, werden die Zusatzmittel entsprechend gesondert hergestellt. Andemfalls müssen die Zusatzmittel, sofem sie in unterschiedlichen Feinheiten und Komverteilungen auf dem Markt sind, entsprechend ausgewählt werden. Überraschend ist, daß die Zusatzmittel insbesondere in der feinst gemahlenen Form mit der Bindemittelmischung ein besonderes, vordem unbekanntes Reaktionsverhalten haben und die angestrebten Injektionsqualitäten gewährleistet werden können, wenn dafür gesorgt wird, daß auch die Feinstzement-Bindemittelmischung mit definierter Qualität - d.h. bezüglich ihrer Bestandteile und ihrer Feinheit und Kornverteilung definiert - zur Verfügung steht. Dies war mit der üblichen Gewinnung durch "Melken" bei der Ermahlung von Normalzementen nicht möglich, weil - wie im Rahmen der Erfindung festgestellt wurde - "MelkProdukte" in ihrer Zusammensetzung schwanken, was wohl auf Entmischungen während des "Melk-Prozesses" zurückzuführen ist. Zum Beispiel reichern sich die "Melk-Produkte" mit bestimmten Mineralphasen, zum Beispiel mit Sulfaten, unkontrollierbar an.

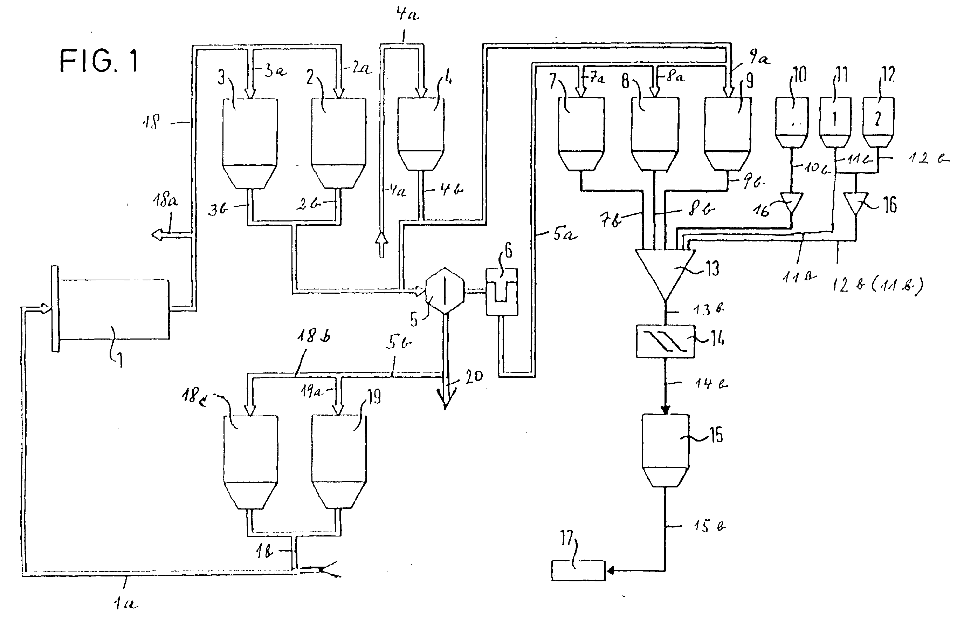

Mit der in der Fig. 1 schematisch dargestellten Anlage sind Trockengemenge ohne weiteres herstellbar. Dabei wird einer Mühle 1 über den Förderweg la reiner Portlandzementklinker aufgegeben und in der Mühle 1 zu einem Klinkervormehl zerkleinert. Das Klinkervormehl wird über die Förderwege 18, 2a in ein Vorratssilo 2 gefördert. Mit derselben gereinigten Mühle 1, der Ober den Förderweg la ein Hüttensand in Granulatform aufgegeben wird, wird der Hüttensand zu einem Hüttensandvormehl vermahlen, das über die Förderwege 18, 3a in ein Vorratssilo 3 gefördert wird. Aus dem Förderweg 18 kann ein Teil des Mahlguts über den Förderweg 18a einer Zementanlage zur Herstellung von zum Beispiel normalem Portlandzement abgezweigt werden. In einem Vorratssilo 4 wird feingemahlener Bentonit bevorratet, der über den Förderweg 4a in das Silo 4 gelangt. Aus den Silos 2, 3 und 4 wird jeweils separat auf den Förderwegen 2b, 3b und 4b Gut abgezogen und in einem Windsichter 5 gesichtet, wobei der gleiche Windsichter 5 - jeweils gereinigt - nactieinander verwendet oder für jeden Gutstrom ein separater Windsichter (nicht dargestellt) bereitgestellt wird. Ebenso kann für den Hüttensand zum Beispiel eine andere Mühle zu Herstellung des Hüttensandvormehls verwendet werden. Die Anzahl der Mühlen richtet sich nach der gewünschten Effektivität der Anlage.

Beim Windsichten im Windsichter 5 wird das Feinstgut mit der vorbestimmten Mahlfeinheit und Komverteilung abgezweigt und über den Förderweg 5a von einem Ventilator 6 in jeweils einen Förderweg 7a, Ba, 9a und von dort in jeweils ein Feinstgutsilo 7; 8 oder 9 geblasen. Beispielsweise enthält das Silo 7 Klinkerfeinstmehl, das Silo B Hüttensandfeinstmehl und das Silo 9 Bentonit in der vorgeschriebenen Mahlfeinheit und Kornverteilung.

Das Grobgut des Sichters 5 wird über einen Förderweg 5b und 18b bzw. 19a jeweils in ein Zwischentagersiio 18c, zum Beispiel für Künkermehl, und ein Zwischenlagersilo 19 für Hüttensandmehl, und von dort über einen Förderweg 1 b, der in den Förderweg 1a mündet, wieder in die Mühle 1 transportiert.

Im Falle des Bentonits werden grobe Bestandteile über den Förderweg 20 verworfen, bzw. anderen Verwendungen zugeführt. Neben den Feinstgutsilos 7, 8 und 9 sind weitere Feinstgutsilos für Zusatzmittel, zum Beispiel die Feinstgutsilos 10, 11 und 12 vorhanden, die jeweils ein Zusatzmittel mit der vorbestimmten Feinheit und Komverteilung enthalten.

Aus den Silos 7 bis 12 werden die Feinstgüter über die Förderwege 7b, 8b, 9b, 10b, 11b, 12b mittels Dosierein richtungen (nicht dargestellt) zur Bildung einer baustellenindividualisierten Mischung dosiert abgezogen und einer Waage 13 aufgegeben. Aus der Waage wird das Feinstgut über den Förderweg 13b in einen Mischer 14, zum Beispiel in einen Pflugscharmischer gebracht, in dem die Feinstgüter zur Werktrockenmischung homogenisiert werden. Anschließend kann die fertige Werktrockenmischung unmittelbar abgesackt oder über einen Förderweg 14b in ein Lagersilo 15 befördert werden, von wo die Fertigmischung über einen Förderweg 15b in einen Silowagen abgefüllt werden kann.

Das Zusetzen der Zusatzmittel kann zur Vereinfachung der Homogenisierung auch gruppiert erfolgen, indem zum Beispiel mindestens zwei Zusatzmittel, zum Beispiel aus den Silos 11 und 12, in eine gemeinsame Vorwaage 16 gefüllt und anschließend der Hauptwaage 13 aufgegeben werden. Zweckmäßig kann zudem sein, jedem Silo eine Vorwaage 16 zuzuordnen, was im Bereich des Silos 10 dargestellt ist.

Nach dem erfindungsgemäßen Verfahren wird der Zementklinker in der Mühle 1 ohne ein Zusatzmittel insbesondere ohne einen Suffatträger Vermahlen. Das Vormehl und das Feinstmehl enthalten somit insbesondere keine Sulfatkomponente. Zur Herstellung von Trockengemengen erfolgt die Vermahlung des Portlandzementklinkers ohne Sulfatzusatz.

Ebenfalls getrennt vorgehalten bzw bevorratet wird in einem Silo ein Sulfatträger für die Beeinflussung der Reaktion des Klinkerfeinstmehls, der üblicherweise schon bei der Vermahlung des Klinkers beigegeben wird.

Eine Anlage zur Verwendung in dem erfindungsgemäßen Verfahren zur Herstellung der erfindungsgemäßen Werktrockenmischung weist selbstverständlich entsprechend viele Silos auf, wie die Werktrockenmischung Bestandteile bzw.. Komponenten enthalten kann oder soll.

Mit der Verwendung einer derartigen Anlage kann eine Werktrockenmischung mit bestimmten Bestandteilen in vorbestimmten Mengen mit vorbestimmter Kornfeinheit und Komverteilung zusammengestellt werden, wodurch die Wirkung der Bestandteile in der Suspension gezielt gesteuert ist. Unregelmäßige Qualitäten des Füllguts können damit ausgeschlossen werden.

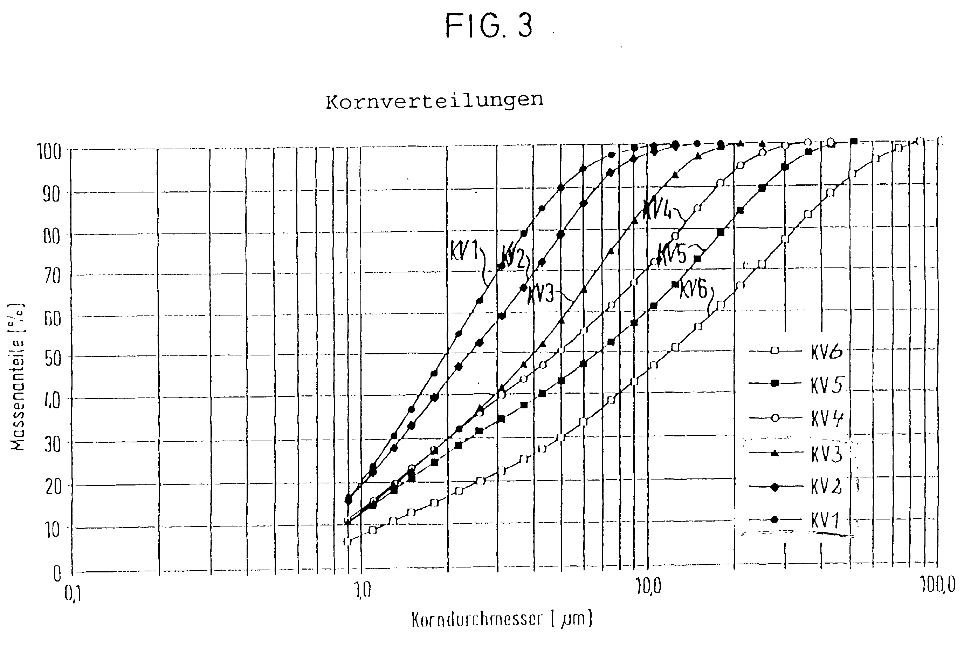

In Figur 3 sind Komverteilungskurven dargestellt. Die Kurven KV1 bis KV3 zeigen beispielsweise Komverteilungen von erfindungsgemäß hergestellten Trockengemengen. Die Kurven KV4 bis KV6 liegen außerhalb der geforderten Kornfeinheit und Komverteilung für ein erfindungsgemäß hergestelltes Trockengemenge. Es liegt aber im Rahmen der Erfindung, Zusatzmittel, insbesondere die Quellkomponente, mit Kornverteilungen gemäß den Kurven KV4 bis KV6 zu verwenden, sofem und soweit das Endprodukt, nämlich die fertige Werktrockenmisehung, den Bereich der Feinheiten und Komverteilungen nach den Kurven KV1 bis KV3 entspricht. Demgemäß kann zum Beispiel ein gröberes Zusatzmittel gemäß Kurve KV6 in einer Menge zugesetzt werden, die ein Trockengemenge mit der Kornverteilung der Kurve KV1 in den Bereich der Komverteilung der Kurve KV3 verdrängt.

Die Feststellung der Reaktionswirkung der Feinheit und Kornverteilung sowohl der Klinkerfeinstmehle, Hüttensandfeinstmehle oder der Gemenge daraus als auch der Zusatzmittel ermöglicht herstellungstechnisch ohne weiteres und ohne großen Aufwand und unmittelbar auf unterschiedliche anwendungsspezifische Anforderung zu reagieren, indem werkseitig entweder mehrere Silos für eine Komponente unterhalten werden, in denen die Komponente jeweils mit unterschiedlicher Feinheit und Komverteilung lagert, oder indem die Mahlaggregate und Sichrer von Charge zu Charge entsprechend eingestellt werden. Da die Silos mit Dosieranlagen kombiniert sind, können Zusammenstellungen von Werktrockenmischungen für Zementsuspensionen bzw. für aus den Zementsuspensionen erhärtete Produkte mit unterschiedlich definierten und reproduzierbaren Eigenschaften nicht nur Ober die Dosiermengen, sondem insbesondere auch über definierte Feinheiten und Komverteilungen kontrolliert erfolgen. Die Anwenderseite wird dadurch erheblich entlastet. Die Kontrolle der Mischungen wird ins Herstellerwerk verlagert, wo eine Kontrolle fachgerecht und einfacher ausführbar ist.

## Patentansprüche

1. Verfahren zum Herstellen eines Trockengemenges zur Herstellung einer Zementsuspension zum Füllen und/oder Verpressen von Porenräumen und Hohlräumen in Lockergesteinen oder Hohlräumen und/oder Rissen im Fels oder in Betonbauteilen in Form einer fertigen, lediglich noch mit Wasser anzumischenden auf die jeweilige Anwendung abgestimmten Werktrockenmischung enthaltend
- ohne Sulfatträger gemahlenes Klinkerfeinstmehl oder Hüttensandfeinstmehl oder Gemenge daraus
- Zusatzmittel
- ggf. Zusatzstoffe,
wobei die Gesamtheit des homogenen Trockengemenges eine stetige und abgestufte Kornverteilung mit Siebdurchgangswerten von d95 s 24 µm und d50 ≤ 7 µm aufweist und alle Komponenten gekennt in Vorratssilos vorgehalten werden und wie folgt verfahren wird:
a1) Portlandzementklinker wird in einer Zementmühle ohne Sulfatträgerzusatz zu einem Klinkervormehl gemahlen,
a2) das Klinkervormehl wird in einem Vorratssilo bevorratet,
a3) das Klinkervormehl wird zur Herstellung eines Klinkerfeinstmehls mit vorbestimmter Feinheit und Kornverteilung gesichtet,
a4) das Klinkerfeinstmehl wird in einem Vorratssilo vorgehalten,
b1) im Falle der Verwendung von Hüttensand wird Hüttensandgranulat in einer Zementmühle zu einem Hüttensandvormehl gemahlen,
b2) das Hüttensandvormehl wird in einem Vorratssilo bevorratet,
b3) das Hüttensandvormehl wird zur Herstellung eines Hüttensandfeinstmehls mit vorbestimmter Feinheit und Kornverteilung gesichtet,
b4) das Hüttensandfeinstmehl wird in einem Vorratssilo vorgehalten,
c) Zusatzmittel werden in Vorratssilos vorgehalten,
d) ggf. werden Zusatzstoffe in Vorratssilos vorgehalten,
e) anwendungsspezifisch vorbestimmte Komponenten werden in vorbestimmten Mengen aus den entsprechenden Vorratssilos dosiert abgezogen und einem Mischer aufgegeben und im Mischer zur Werktrockenmischung mit vorbestimmten Eigenschaften homogenisilend gemischt.

2. Verfahren nach Anspruch 1
**dadurch gekennzeichnet,**
**daß** das jeweilige Grobgut des Sichters ebenfalls bevorratet wird.

3. Verfahren nach Anspruch 2,
**dadurch gekennzeichnet,**
**daß** Grobgut der jeweiligen Vormahlung zugeführt wird.

4. Verfahren nach Anspruch 2 oder 3,
**dadurch gekennzeichnet,**
**daß** die Zusatzmittel vor der Bevorratung gemahlen werden.

5. Verfahren nach einem oder mehreren der Ansprüche 1 bis 4,
**dadurch gekennzeichnet,**
**daß** die Zusatzmittel in etwas gröberer Feinheit und etwas weiter abgestufter Kornverteilung zugemischt werden als gemäß Anspruch 1, 14 und 15 gefordert wird.

6. Verfahren nach einem oder mehreren der Ansprüche 1 bis 5,
**dadurch gekennzeichnet,**
**daß** zumindest eine Komponente der Werktrockenmischung in unterschiedlichen Feinheiten und Kornverteilungen getrennt vorgehalten wird.

7. Verfahren nach einem oder mehreren der Ansprüche 1 bis 6,
**dadurch gekennzeichnet,**
**daß** jede Komponente der Werktrockenmischung in einem Vorratssilo (z.B. 7 bis 12) bevorratet wird, wobei jedes Silo mit einer Dosiereinrichtung kombiniert zusammenwirkt, wobei den Silos ein Mischer (14) nachgeschaltet ist.

8. Verfahren nach Anspruch 7,
**dadurch gekennzeichnet,**
**daß** ein Wägegefäß (13) verwendet wird, das dem Mischer (14) vorgeschaltet ist.

9. Verfahren nach Anspruch 7 oder 8,
**dadurch gekennzeichnet,**
**daß** als Mischer (14) ein Hochleistungsmischer verwendet wird.

10. Verfahren nach einem oder mehreren der Ansprüche 7 bis 9,
**dadurch gekennzeichnet,**
**daß** für mindestens eine Komponente mindestens zwei Vorratsbehälter verwendet werden, in denen die Komponenten bevorratet werden.

11. Verfahren nach einem oder mehreren der Ansprüche 7 bis 10,
**dadurch gekennzeichnet,**
**daß** ein Vorratssilo (15) verwendet wird, das dem Mischer (14) nachgeordnet ist.

12. Verfahren nach einem oder mehreren der Ansprüche 7 bis 11,
**dadurch gekennzeichnet,**
**daß** eine Anlage verwendet wird, die eine Zementmühle (1), ein Vorratssilo (2) und einen Windsichter (5) zur Erzeugung von Klinkerfeinstmehl aufweist, wobei die Auslaufseite der Zementmühle (1) mit der Einlaufseite des Vorratssilos (2) und die Auslaufseite des Vorratssilos (2) mit der Einlaufseite des Windsichters (5) sowie die Auslaufseite des Windsichters (5) mit der Einlaufseite-eines Klinkerfeinstmehlsilos (8) über entsprechende Förderwege in Verbindung stehen.

13. Verfahren nach Anspruch 12,
**dadurch gekennzeichnet,**
**daß** eine Anlage verwendet wird, die eine Zementmühle (1), ein Vorratssilo (3) und einen Windsichter (5) zur Erzeugung von Hüttensandfeinstmehl aufweist, wobei die Auslaufseite der Zementmühle (1) mit der Einlaufseite des Vorratssilos (3) und die Auslaufseite des Vorratssilos (3) mit der Einlaufseite des Windsichters, (5) sowie die Auslaufseite des Windsichters (5) mit der Einlaufseite des Hüttensandfeinstmehlsilos (7) über entsprechende Förderwege in Verbindung stehen.

14. Verfahren nach Anspruch 12 oder 13,
**dadurch gekennzeichnet,**
**daß** die Anlage verwendet wird, bei der die Auslaufseite des Windsichters (5) über Förderwege mit der Einlaufseite eines Silos (18c, 19) in Verbindung steht, wobei die Auslaufseite des und/oder der Silos (18c/19) über einen Förderweg mit der Zementmühle (1) in Verbindung steht.

15. Verfahren nach Anspruch 1,
**dadurch gekennzeichnet,**
**daß** Siebdurchgangswerte von d95 ≤ 16 und d 50 ≤ 5 µm eingestellt werden.

16. Verfahren nach Anspruch 15,
**dadurch gekennzeichnet,**
**daß** ein Verhältnis der Siebdurchgangswerte von d50 zu d95 = 0,33 ± 0,04 eingestellt wird.

17. Verfahren nach Anspruch 15 oder 16,
**dadurch gekennzeichnet,**
**daß** 5 bis 95 Gew.-% Hüttensandfeinstmehl, bezogen auf das Klinkerfeinstmehl, verwendet werden.

18. Verfahren nach einem oder mehreren der Ansprüche 15 bis 17,
**dadurch gekennzeichnet,**
**daß** ein Anreger für das Hüttensandfeinstmehl mit gleicher oder feinerer Mahlfeinheit und Kornverteilung im Vergleich zum Hüttensandfeinstmehl verwendet wird.

19. Verfahren nach einem oder mehreren der Ansrpüche 15 bis 18,
**dadurch gekennzeichnet,**
**daß** als pulverförmiges Fließmittel ein Naphthalinsulfonatformaldehydkondensat verwendet wird.

20. Verfahren nach einem oder mehreren der Ansprüche 16 bis 19,
**dadurch gekennzeichnet,**
**daß** Zusatzmittel jeweils in Mengen von 2 bis 5 Gew.-% verwendet werden.

21. Verfahren nach einem oder mehreren der Ansprüche 15 bis 20,
**dadurch gekennzeichnet,**
**daß** als Zusatzmittel eine Quellkomponente verwendet wird.

22. Verfahren nach einem oder mehreren der Ansprüche 15 bis 21,
**dadurch gekennzeichnet,**
**daß** als Zusatzstoffe Bentonit und/oder Trass und/oder hochdisperse Kieselsäure verwendet werden.

23. Verfahren nach einem oder mehreren der Ansprüche 15 bis 22,
**dadurch gekennzeichnet,**
**daß** als Zusatzmittel Fließmittel und/oder Erhärtungsverzögerer und/oder Erhärtungsbeschleuniger und/oder Wasserrückhaltemittel verwendet werden.

## Claims

1. Process for producing a dry mix for producing a cement suspension for filling and/or injecting into pore spaces and hollow spaces in loose stones or hollow spaces and/or cracks in rock or in concrete components in the form of a finished factory dry mixture which is matched to the respective application and only needs to be mixed with water, containing
- superfine ground clinker milled without sulphate carrier or superfine ground slag sand or mixtures thereof,
- modifiers
- if desired, additives,
where the overall homogeneous dry mix has a continuous and gradated particle size distribution with sieve passage values of d₉₅ ≤ 24 µm and d₅₀ ≤ 7 µm and all components are held in stock separately in stock hoppers and the following procedure is employed:
a1) Portland cement clinker is milled without addition of sulphate carrier in a cement mill to produce a precursor ground clinker,
a2) the precursor ground clinker is stored in a stock hopper,
a3) the precursor ground clinker is classified to produce a superfine ground clinker having a predetermined fineness and particle size distribution,
a4) the superfine ground clinker is held in stock in a stock hopper,
b1) in the case of the use of slag sand, granulated sand slag is milled in a cement mill to produce a precursor ground slag sand,
b2) the precursor ground slag sand is stored in a stock hopper,
b3) the precursor ground slag sand is classified to produce a superfine ground slag sand having a predetermined fineness and particle size distribution,
b4) the superfine ground slag sand is stored in a stock hopper,
c) modifiers are stored in stock hoppers,
d) if desired, additives are stored in stock hoppers,
e) predetermined components specific to the application are taken from the corresponding stock hoppers in metered, predetermined amounts and supplied to a mixer and are mixed and homogenized in the mixer to produce the factory dry mix having predetermined properties.

2. Process according to Claim 1, **characterized in that** the respective oversize from the classifier is likewise stored.

3. Process according to Claim 2, **characterized in that** the oversize is passed to the respective premilling.

4. Process according to Claim 2 or 3, **characterized in that** the modifiers are milled before storage.

5. Process according to one or more of Claims 1 to 4, **characterized in that** the modifiers are mixed in in somewhat coarser fineness and somewhat more gradated particle size distribution than required according to Claims 1, 14 and 15.

6. Process according to one or more of Claims 1 to 5, **characterized in that** at least one component of the factory dry mixture is held in stock separately in different finenesses and particles size distributions.

7. Process according to one or more of Claims 1 to 6, **characterized in that** each component of the factory dry mixture is stored in a stock hopper (e.g. 7 to 12), where each hopper works in combination with a metering device and a mixer (14) is arranged downstream of the hoppers.

8. Process according to Claim 7, **characterized in that** a weighing vessel (13) arranged upstream of the mixer (14) is used.

9. Process according to Claim 7 or 8, **characterized in that** a high-performance mixer is used as mixer (14).

10. Process according to one or more of Claims 7 to 9, **characterized in that** for at least one component use is made of at least two stock containers in which the components are stored.

11. Process according to one or more of Claims 7 to 10, **characterized in that** use is made of a stock hopper (15) which is arranged downstream of the mixer (14).

12. Process according to one or more of Claims 7 to 11, **characterized in that** use is made of a plant comprising a cement mill (1), a stock hopper (2) and an air classifier (5) for producing superfine ground clinker, where the outlet end of the cement mill (1) is connected to the inlet end of the stock hopper (2) and the outlet end of the stock hopper (2) is connected to the inlet end of the air classifier (5) and the outlet end of the air classifier (5) is connected to the inlet end of a superfine ground clinker hopper (18), in each case via appropriate transport paths.

13. Process according to Claim 12, **characterized in that** use is made of a plant which comprises a cement mill (1), a stock hopper (3) and an air classifier (5) for producing superfine ground slag sand, where the outlet end of the cement mill (1) is connected to the inlet end of the stock hopper (3) and the outlet end of the stock hopper (3) is connected to the inlet end of the air classifier (5) and the outlet end of the air classifier (5) is connected to the inlet end of the superfine ground slag sand hopper (7), in each case via appropriate transport paths.

14. Process according to Claim 12 or 13, **characterized in that** use is made of the plant, in which the outlet end of the air classifier (5) is connected via transport paths with the inlet end of a hopper (18c, 19) and the outlet end of the silo and/or silos (18c/19) is connected via a transport path to the cement mill (1).

15. Process according to Claim 1, **characterized in that** sieve passage values of d₉₅ ≤ 16 and d₅₀ ≤ 5 µm are set.

16. Process according to Claim 15, **characterized in that** a ratio of the sieve passage values of d₅₀ to d₉₅ = 0.33 ± 0.04 is set.

17. Process according to Claim 15 or 16, **characterized in that** from 5 to 95% by weight of superfine ground slag sand, based on the superfine ground clinker is used.

18. Process according to one or more of Claims 15 to 17, **characterized in that** an activator for the superfine ground slag sand having a milling fineness and particle size distribution which is identical to or finer than that of the superfine ground slag sand is used.

19. Process according to one or more of Claims 15 to 18, **characterized in that** a naphthalene-sulphonateformaldehyde condensate is used as pulverulent fluidizer.

20. Process according to one or more of Claims 15 to 19, **characterized in that** modifiers in amounts of from 2 to 5% by weight in each case are used.

21. Process according to one or more of Claims 15 to 20, **characterized in that** an expanding component is used as modifier.

22. Process according to one or more of Claims 15 to 21, **characterized in that** bentonite and/or trass and/or finely divided silica are used as additives.

23. Process according to one or more of Claims 15 to 22, **characterized in that** fluidizers and/or setting retarders and/or setting accelerators and/or water retention agents are used as modifiers.

## Revendications

1. Procédé pour la préparation d'un mélange pulvérulent pour la fabrication d'une suspension de ciment destiné au remplissage et/ou au scellement d'espaces poreux et d'espaces creux dans des roches poreuses ou d'espaces creux et/ou de fissures dans le rocher ou dans des éléments de construction en béton, sous la forme d'un mélange sec d'usine prêt à l'emploi, adapté à l'application respective et qui doit seulement encore être mélangé avec de l'eau, contenant
- de la poudre ultrafine de clinker ou de poudre ultrafine de laitier broyée en l'absence de sulfate à titre de support ou encore un mélange des deux
- des produits d'addition
- le cas échéant, des adjuvants,
la totalité du mélange sec homogène présentant une distribution granulométrique constante et échelonnée avec des valeurs de passe au tamis de d95 ≤ 24 µm et d50 ≤ 7 µm et tous les composants étant mis séparément à disposition dans des silos de stockage, le procédé étant mis en oeuvre comme suit :
a1) du clinker de ciment Portland est broyé dans un broyeur à ciment sans addition de sulfate à titre de support pour obtenir une poudre préalable de clinker,
a2) la poudre préalable de clinker est mise en réserve dans un silo de stockage,
a3) la poudre préalable de clinker est passée au tamis pour la préparation d'une poudre ultrafine de clinker possédant une finesse et une distribution granulométrique prédéfinies;
a4) la poudre ultrafine de clinker est mise à disposition dans un silo de stockage,
b1) dans le cas d'une utilisation de laitier, du laitier granulé est broyé dans un broyeur à ciment pour obtenir une poudre préalable de laitier,
b2) la poudre préalable de laitier est mise en réserve dans un silo de stockage,
b3) la poudre préalable de laitier est passée au tamis pour la préparation d'une poudre ultrafine de laitier possédant une finesse et une distribution granulométrique prédéfinies,
b4) la poudre ultrafine de laitier est mise à disposition dans un silo de stockage,
c) des produits d'addition sont mis à disposition dans des silos de stockage,
d) le cas échéant, des adjuvants sont mis à disposition dans des silos de stockage,
e) des composants prédéfinis en fonction d'une utilisation personnalisée sont prélevés de manière dosée dans des quantités prédéfinies à partir des silos de stockage correspondants pour être introduit dans un mélangeur et pour être soumis à un mélange homogène dans le mélangeur pour obtenir le mélange sec d'usine possédant des propriétés prédéfinies.

2. Procédé selon la revendication 1, **caractérisé en ce que** la matière grossière respective du tamis est également mise à disposition.

3. Procédé selon la revendication 2, **caractérisé en ce que** la matière grossière est acheminée au broyage préalable respectif.

4. Procédé selon la revendication 2 ou 3, **caractérisé en ce que** les produits d'addition sont broyés avant la mise en réserve.

5. Procédé selon l'une ou plusieurs des revendications 1 à 4, **caractérisé en ce que** les produits d'addition sont ajoutés par mélange avec une finesse quelque peu inférieure et une distribution granulométrique à étendue quelque peu supérieure par rapport aux exigences mentionnées aux revendications 1, 14 et 15.

6. Procédé selon l'une ou plusieurs des revendications 1 à 5, **caractérisé en ce qu'**au moins un composant du mélange sec d'usine est mis séparément à disposition avec des finesses et des distributions granulométriques différentes.

7. Procédé selon l'une ou plusieurs des revendications 1 à 6, **caractérisé en ce que** chaque composant du mélange sec d'usine est mis à disposition dans un silo de stockage (par exemple de 7 à 12), chaque silo coopérant de manière combinée avec un dispositif de dosage, un mélangeur (14) étant monté à la suite des silos.

8. Procédé selon la revendication 7, **caractérisé en ce qu'**on utilise un récipient de pesée (13) qui est monté en amont du mélangeur (14).

9. Procédé selon la revendication 7 ou 8, **caractérisé en ce qu'**on utilise, à titre de mélangeur (14), un mélangeur à haut rendement.

10. Procédé selon l'une ou plusieurs des revendications 7 à 9, **caractérisé en ce qu'**on utilise pour au moins un composant au moins deux récipients de stockage dans lesquels on met les composants en réserve.

11. Procédé selon l'une ou plusieurs des revendications 7 à 10, **caractérisé en ce qu'**on utilise un silo de stockage (15) qui est monté à la suite du mélangeur (14) .

12. Procédé selon une ou plusieurs des revendications 7 à 11, **caractérisé en ce qu'**on utilise une installation qui présente un broyeur à ciment (1), un silo de stockage (2) et un séparateur pneumatique (5) pour l'obtention de poudre ultrafine de clinker, le côté sortie du broyeur à ciment (1) étant relié au côté entrée du silo de stockage (2) et le côté sortie du silo de stockage (2) étant relié au côté entrée du séparateur pneumatique (5), le côté sortie du séparateur pneumatique (5) étant également mis en liaison avec le côté entrée d'un silo de poudre ultrafine de clinker (8) via des parcours correspondants.

13. Procédé selon la revendication 12, **caractérisé en ce qu'**on utilise une installation qui présente un broyeur à ciment (1), un silo de stockage (3) et un séparateur pneumatique (5) pour l'obtention de poudre ultrafine de laitier, le côté sortie du broyeur à ciment (1) étant relié au côté entrée du silo de stockage (3) et le côté sortie du silo de stockage (3) étant relié au côté entrée du séparateur pneumatique (5), le côté sortie du séparateur pneumatique (5) étant également mis en liaison avec le côté entrée du silo de poudre ultrafine de laitier (7) via des parcours correspondants.

14. Procédé selon la revendication 12 ou 13, **caractérisé en ce qu'**on utilise une installation dans laquelle le côté sortie du séparateur pneumatique (5) est relié, via des parcours, au côté entrée d'un silo (18c, 19), le côté sortie du et/ou des silos (18c/19) étant relié, via un parcours, au broyeur à ciment (1).

15. Procédé selon la revendication 1, **caractérisé en ce qu'**on règle des valeurs de passe au tamis de d95 ≤ 16 µm et d50 ≤ 5 µm.

16. Procédé selon revendication 15, **caractérisé en ce qu'**on règle un rapport des valeurs de passe au tamis de d50 à d95 = 0,33 ± 0,04.

17. Procédé selon revendication 15 ou 16, **caractérisé en ce qu'**on utilise de la poudre ultrafine de laitier, à concurrence de 5 à 95 % en poids, rapportés à la poudre ultrafine de clinker.

18. Procédé selon l'une ou plusieurs des revendications 15 à 17, **caractérisé en ce qu'**on utilise un activateur pour la poudre ultrafine de laitier, qui possède une finesse de broyage et une distribution granulométrique identique ou supérieure à celles de la poudre ultrafine de laitier.

19. Procédé selon l'une ou plusieurs des revendications 15 à 17, **caractérisé en ce qu'**on utilise, à titre de fluidifiant pulvérulent, un condensat de naphtalène-sulfonate-formaldéhyde.

20. Procédé selon l'une ou plusieurs des revendications 15 à 19, **caractérisé en ce qu'**on utilise des produits d'addition respectivement dans des quantités de 2 à 5 % en poids.

21. Procédé selon l'une ou plusieurs des revendications 15 à 20, **caractérisé en ce qu'**on utilise un agent gonflant à titre de produit d'addition.

22. Procédé selon l'une ou plusieurs des revendications 15 à 21, **caractérisé en ce qu'**on utilise, à titre d'adjuvants, de la bentonite et/ou du trass et/ou de l'acide silicique fortement dispersé.

23. Procédé selon l'une ou plusieurs des revendications 15 à 22, **caractérisé en ce qu'**on utilise, à titre de produit d'addition, des fluidifiants et/ou des ralentisseurs du durcissement et/ou des accélérateurs du durcissement et/ou des agents de rétention d'eau.
